# EUROPÄISCHE PATENTSCHRIFT

(11) **EP 0 421 534 B1**
(45) Veröffentlichungstag und Bekanntmachung des Hinweises auf die Patenterteilung: **06.04.1994**
(21) Anmeldenummer: 90202590.7
(22) Anmeldetag: 01.10.1990
(51) Int. Cl.: H02J 3/14, H02M 5/293

(54) **Schaltungsanordnung zum Speisen einer Last**
Circuit arrangement for power supply to a load
Disposition de circuit pour l'alimentation d'une charge

(30) Priorität: 05.10.1989 DE 3933202
(43) Veröffentlichungstag der Anmeldung: 10.04.1991
(73) Patentinhaber: Philips Patentverwaltung GmbH, 22335 Hamburg (DE); Philips Electronics N.V., 5621 BA Eindhoven (NL)
(72) Erfinder: Albach, Manfred, Dr., D-5100 Aachen (DE)
(74) Vertreter: Peters, Carl Heinrich, Dipl.-Ing.

(56) Entgegenhaltungen:
- EP-A- 0 004 199
- EP-A- 0 135 968
- EP-A- 0 225 657
- EP-A- 0 235 578
- PATENT ABSTRACTS OF JAPAN vol. 7, no. 51 (P-179)(1196) 26 Februar 1983 ; & JP-A-57 199 015

## Beschreibung

Die Erfindung bezieht sich auf eine Schaltungsanordnung zum Speisen einer Last mit Energie aus einer eine Wechselspannung abgebenden Quelle mit Hilfe eines Schaltnetzteils. Derartige Schaltungsanordnungen sind aus der Monographie "Schaltnetzteile in der Praxis" von Otmar Kilgenstein, erschienen 1986 im Vogel-Buchverlag, bekannt.

Um derartige Schaltungsanordnungen und die darin verwendeten Schaltnetzteile in einem breiten Anwendungsbereich, insbesondere für eine Last höherer Leistungsaufnahme, wirtschaftlich einsetzen zu können, ist es erwünscht, auftretende Leistungsverluste so gering zu halten, daß auf besondere Maßnahmen zur Kühlung der Schaltungsanordnung verzichtet werden kann. Außerdem sollen aus Kostengründen die Bauteile der Schaltungsanordnung möglichst klein dimensioniert werden können.

Die Erfindung hat die Aufgabe, eine Schaltungsanordnung der eingangs genannten Art derart auszubilden, daß im Sinne der vorstehenden Ausführungen eine möglichst kostengünstige, kompakte Bauform bei niedrigen, elektrischen Verlusten erzielt wird.

Diese Aufgabe wird dadurch gelöst, daß die Last wenigstens zwei Teillasten umfaßt und daß Energie einer der Teillasten über das Schaltnetzteil und wahlweise zusätzlich wenigstens einer zweiten der Teillasten unmittelbar aus der Quelle zuführbar ist.

Für manche Anwendungen besteht die Möglichkeit, eine Last in mehrere Teillasten aufzuteilen, oder eine zu speisende Last besteht von vornherein aus mehreren Teillasten, z.B. mehreren Heizelementen, Lampen usw. In der Regel wird es bei einer solchen Ausbildung der Last möglich sein, den einzelnen Teillasten nicht in jedem Augenblick identische Leistungen zuzuführen. Die Erfindung macht sich diese Erkenntnis zunutze und gibt eine Schaltungsanordnung an, mit der zur Einstellung der gesamten Energieaufnahme der Last jeweils nur eine der Teillasten über das Schaltnetzteil gespeist wird, während wahlweise gleichzeitig eine oder mehrere weitere Teillasten unmittelbar aus der die Wechselspannung abgebenden Quelle Energie zugeführt erhalten. Das Schaltnetzteil braucht dann nur für einen der Anzahl der Teillasten entsprechenden Teil der gesamten Leistungsaufnahme der Last ausgelegt zu werden, wodurch eine elektrisch wesentlich schwächere und mechanisch wesentlich kompaktere Dimensionierung mit einer sehr geringen Verlustleistung erzielt werden kann. Dabei werden die Teillasten, die unmittelbar aus der Quelle gespeist werden, an diese bevorzugt über besondere Schalterelemente angeschlossen, die einerseits in der Regel noch geringere, elektrische Verluste aufweisen als üblicherweise ein Schaltnetzteil und andererseits auch für die Übertragung geringerer Leistungen entsprechend der Leistungsaufnahme der angeschlossenen Teillast dimensioniert werden können. Auch wenn dadurch die Anzahl der einzusetzenden Bauelemente gegenüber einem für die gesamte Leistungsaufnahme dimensionierten Schaltnetzteil vergrößert ist, wird doch insgesamt eine kompaktere Bauform und werden geringere Verluste erzielt, wobei aber die Einstellbarkeit der Leistungsaufnahme von Null bis zur höchstmöglichen Leistung gewährleistet ist. Die dabei eingesetzten Bauelemente sind auch besonders kostengünstig.

Je nach Anzahl der vorhandenen Teillasten wird bei der erfindungsgemäßen Schaltungsanordnung im Betrieb bei allmählicher Erhöhung der Leistungszufuhr zunächst nur eine Teillast über das Schaltnetzteil gespeist. Erreicht diese Teillast ihre maximale (Teil-) Leistungsaufnahme, wird sie oder eine andere Teillast unmittelbar aus der Quelle gespeist und bei weiterer Erhöhung der gesamten Leistungsaufnahme eine weitere Teillast mit einstellbarer Leistungsaufnahme über das Schaltnetzteil betrieben. Auf diese Weise können nach und nach alle Teillasten zugeschaltet werden, bis sämtliche Teillasten mit den ihnen höchstens zuführbaren Leistungen gespeist werden.

In manchen Anwendungen ist es erforderlich, daß die Leistungsaufnahme der einzelnen Teillasten im zeitlichen Mittel übereinstimmt. Nach einer Weiterbildung der Erfindung wird dies dadurch erreicht, daß in einen ersten Zeitabschnitt eine erste Teillast über das Schaltnetzteil und wahlweise zusätzlich wenigstens eine zweite Teillast unmittelbar aus der Quelle gespeist werden kann, daß in einem zweiten Zeitabschnitt die zweite Teillast über das Schaltnetzteil und wahlweise zusätzlich wenigstens die erste Teillast unmittelbar aus der Quelle gespeist und diese Reihenfolge zyklisch fortgesetzt werden kann. Im Rhythmus der aufeinanderfolgenden Zeitabschnitte wird somit nacheinander jede der Teillasten einen Zeitabschnitt lang über das Schaltnetzteil gespeist, während die anderen Teillasten wahlweise zyklisch zugeschaltet werden können. Im Mittel ergibt sich dadurch in einfacher Weise eine gleichmäßige Leistungsaufnahme aller Teillasten.

In einer besonders einfachen Fortbildung der Erfindung umfaßt die Last lediglich zwei Teillasten, von denen dann jeweils eine abwechselnd über das Schaltnetzteil und die andere wahlweise zusätzlich unmittelbar aus der Quelle gespeist werden kann.

Bevorzugt entsprechen der erste und der zweite Zeitabschnitt je wenigstens nahezu einem ganzzahligen Vielfachen einer Halbperiode der Wechselspannung. Dadurch wird eine einfache Umsteuerung der Speisung der Teillasten über das Schaltnetzteil und wahlweise unmittelbar aus der Quelle ermöglicht. Insbesondere erfolgt diese Umsteuerung beim Wechsel von einer Halbperiode der Wechselspannung zur nächsten.

Gemäß einer Fortbildung entspricht der erste Zeitabschnitt einer ersten und der zweite Zeitabschnitt einer daran anschließenden zweiten Halbperiode der Wechselspannung. Dadurch wird eine besonders kurzfristige Ausmittelung der Leistungsaufnahmen der Teillasten erreicht und außerdem eine besonders einfache Umsteuerung ermöglicht.

In einer vorteilhaften Weiterbildung umfaßt die erfindungsgemaße Schaltungsanordnung
- zwei Lastzweige, die je eine Teillast und einen dazu in Reihe angeordneten Schalter umfassen und in Reihe zwischen zwei Anschlüsse der Quelle geschaltet sind, wobei einer der Pole jeder Teillast mit je einem Anschluß der Quelle verbunden ist,
- zwei Ableitzweige und zwei Rückflußzweige je in Reihe zwischen den Anschlüssen der Quelle,
- je einen Verbindungszweig zwischen je einem der Anschlüsse der Quelle und dem Verbindungspunkt zwischen der Teillast und dem Schalter des mit dem anderen der Anschlüsse der Quelle verbundenen Lastzweiges,
- und zeichnet sich dadurch aus, daß das Schaltnetzteil einen über eine Induktivität und einen hochfrequent betätigbaren Zerhackerschalter führenden Schaltpfad sowie einen Freilaufpfad umfaßt, über den ein Strom in der Induktivität bei sperrendem Zerhackerschalter ableitbar ist,
- daß der Verbindungspunkt der Lastzweige mit dem Verbindungspunkt der Ableitzweige über den Schaltpfad und mit dem Verbindungspunkt der Rückflußzweige über den Freilaufpfad verbunden ist,
- wobei in jeder Halbperiode der Wechselspannung Strom in einem der Lastzweige über den Schaltpfad und den gegenüberliegenden Ableitzweig bzw. zur Teillast zurück über den Freilaufpfad und einen Rückf lußzweig und wahlweise zusätzlich durch die jeweils andere Teillast und den mit ihr verbundenen Verbindungszweig leitbar ist.

Mit dieser Anordnung, die besonders einfach und kostengünstig aufgebaut werden kann, ist eine gute und einfache Anpassung an unterschiedliche Betriebszustände der vorstehend beschriebenen Art möglich. Bei dieser Schaltungsanordnung sind die Schalter in den Lastzweigen vorzugsweise als unidirektionale Halbleiterschalter ausgebildet. Sie leiten also nur in einer Richtung den Strom, während sie in der anderen Richtung stets gesperrt sind. Im einfachsten Fall können derartige Schalter durch eine Reihenschaltung aus einem Transistor und einer Diode gebildet sein. Der geringeren Verluste wegen wird dabei bevorzugt ein Feldeffekttransistor oder ein sog. IGBT (insulated gate bipolar transistor) eingesetzt.

Die Verbindungszweige der vorgenannten Schaltungsanordnung umfassen in einer vorteilhaften Ausgestaltung bidirektionale Halbleiterschalter, da sie im Gegensatz zu den Schaltern in den Lastzweigen in beiden Richtungen Strom führen sollen. Als einfache und verlustarme Bauform derartiger Schalter dienen z.B. Triacs.

Die Ableitzweige umfassen nach einer weiteren Fortbildung unidirektional leitende Elemente. Dies ist notwendig, um einen Stromf luß nur in Richtung vom Schaltnetzteil zu den Anschlüssen der Quelle zuzulassen, da anderenfalls die Quelle kurzgeschlossen würde. Die Ableitzweige sind daher bevorzugt mit Dioden versehen.

Da im Gegensatz dazu an die Rückflußzweige keine besonderen Anforderungen außer der Einhaltung geringer Verluste gestellt werden, enthalten sie bevorzugt einfache Halbleiterschalter, beispielsweise unidirektional oder bidirektional leitende Feldeffekttransistoren, sog. IGBT oder auch Thyristoren.

Bei der vorstehend erläuterten Schaltungsanordnung sind die Halbleiterschalter in Last-, Verbindungs- und Rückflußzweigen bevorzugt im Wechsel der Halbperioden der Wechselspannung umsteuerbar. Beispielsweise können sie über eine Steuerschaltung angesteuert werden, die ein von der Polarität der Wechselspannung abhängiges und zum Zeitpunkt ihrer Nulldurchgänge wechselndes Steuersignal erzeugt.

Die erfindungsgemäße Schaltungsanordnung entnimmt der Quelle in jedem Betriebszustand einen wenigstens weitgehend sinusförmigen Strom, wodurch Oberwellenanteile und Störungen auch bei Lasten hoher Leistungsaufnahme vernachlässigbar gering gehalten werden.

Ein Ausführungsbeispiel der Erfindung ist in der Zeichnung dargestellt und wird im nachfolgenden näher beschrieben. Darin zeigt
Fig. 1 eine gemäß der Erfindung ausgeführte Schaltungsanordnung zum Speisen einer aus zwei Teillasten bestehenden Last und
Fig. 2 ein Schaltnetzteil zum Einsatz in einer Schaltungsanordnung gemäß Fig. 1.

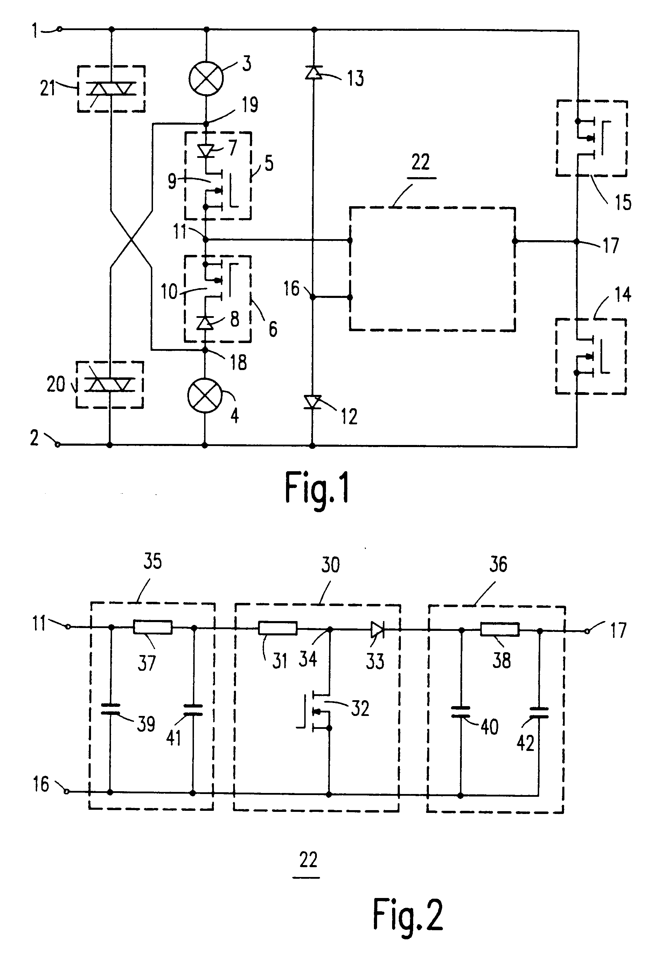

Die Schaltungsanordnung nach Fig. 1, die über einen ersten und einen zweiten Anschluß 1 bzw. 2 mit einer nicht dargestellten, eine Wechselspannung abgebenden Quelle verbindbar ist, umfaßt zwischen diesen Anschlüssen 1, 2 einer Reihenschaltung aus zwei Lastzweigen, bestehend aus je einer Reihenschaltung aus einer Teillast 3 bzw. 4 und je einem Schalter 5 bzw. 6. Die Teillasten 3, 4 sind im Beispiel nach Fig. 1 als Lampen ausgebildet, die zu Beleuchtungs- oder auch Kochzwecken mit einstellbarer Leistung gespeist werden sollen. Als Teillasten können jedoch auch Heizelemente oder andere zu steuernde elektrische Verbraucher zum Einsatz kommen.

Die Schalter 5, 6 umfassen je eine Reihenschaltung aus einer Diode 7 bzw. 8 und einem Feldeffekttransistor 9 bzw. 10. Sie leiten damit den Strom nur von der zugeordneten Teillast 3 bzw. 4 aus in Richtung auf einen Verbindungspunkt 11 zwischen dem ersten und dem zweiten Lastzweig 3, 5 bzw. 4, 6. Bei diesem Beispiel wurden für die Schalter 5, 6 Feldeffekttransistoren 9, 10 gewählt. In einer Abwandlung der Anordnung nach Fig. 1 können die Schalter 5, 6 auch als entsprechend gepolte Thyristoren ausgebildet sein.

Zwischen den Anschlüssen 1, 2 sind weiterhin zwei Ableitzweige 12, 13 sowie zwei Rückflußzweige 14, 15 je in Reihe zueinander angeordnet. Die Ableitzweige 12, 13 bestehen aus je einer Diode, deren Anodenanschlüsse an einem zweiten Verbindungspunkt 16 zusammengefaßt sind und deren ,30 Kathodenanschlüsse mit dem ersten bzw. dem zweiten Anschluß 1 bzw. 2 der Quelle verbunden sind. Durch diese unidirektional leitenden Elemente wird erreicht, daß der Strom vom zweiten Verbindungspunkt 16 mit geringen Leistungsverlusten und ohne zusätzlichen Steueraufwand wahlweise zu einem der Anschlüsse 1 bzw. 2 abfließen kann, ohne daß zwischen diesen Anschlüssen 1, 2 ein Kurzschluß entsteht.

Die Rückflußzweige 14, 15 bestehen im vorliegenden Beispiel aus einfachen Halbleiterschaltern, bevorzugt Feldeffekttransistoren mit niedrigen Leitungsverlusten. Je einer dieser Feldeffekttransistoren ist zwischen einen der Anschlüsse 1 bzw. 2 und einen dritten Verbindungspunkt 17 geschaltet. Im Betrieb führen die Rückflußzweige 14, 15 stets nur in Richtung vom dritten Verbindungspunkt 17 zu den Anschlüssen 1 bzw. 2 Ströme, so daß hier auch unidirektionale Halbleiterschalter wie für die Schalter 5, 6 in den Lastzweigen einsetzbar sind. Je nach Ausführung kann hier die Lösung mit den geringsten Energieverlusten und dem geringsten Konstruktionsaufwand gewählt werden.

Von einem vierten Verbindungspunkt 19 zwischen der ersten Teillast 3 und dem ersten Schalter 5 ist in Fig. 1 ein zweiter Verbindungszweig 20 an den zweiten Anschluß 2 der Quelle geführt, während zwischen den ersten Anschluß 1 und einem fünften Verbindungspunkt 18, der die zweite Teillast 4 mit dem zweiten Schalter 6 verbindet, ein erster Verbindungszweig 21 angeordnet ist. Die Verbindungszweige 20, 21 enthalten bidirektionale Halbleiterschalter, vorzugsweise Triacs, durch die ein verlustarmer Stromf luß in beiden Leitungsrichtungen ermöglicht wird.

Die Schalter 5, 6, die Rückflußzweige 14, 15 bzw. die von ihnen umfaßten Halbleiterschalter sowie die Verbindungszweige 20, 21 weisen je einen Steueranschluß auf, über den sie wahlweise in einen leitenden oder einen gesperrten Zustand schaltbar sind. Die Steueranschlüsse - in Fig. 1 lediglich angedeutet - sind mit einer nicht dargestellten Steuerschaltung verbunden, die die Betriebszustände der Schalter, Rückfluß- bzw. Verbindungszweige nach einem vorgegebenen, im folgenden noch näher dargestellten Zeitablauf steuert.

Die Schaltungsanordnung nach Fig. 1 umfaßt schließlich ein Schaltnetzteil 22, das mit dem ersten, zweiten und dritten Verbindungspunkt 11, 16 und 17 verbunden ist und für das Fig. 2 ein Ausführungsbeispiel zeigt. Dieses umfaßt eine Umwandlergruppe 30 mit einer Induktivität 31, einem Zerhackerschalter 32 und einer Freilaufdiode 33. Die Induktivität 31 und der Zerhackerschalter 32 bilden - in Reihe zwischen dem ersten und dem zweiten Verbindungspunkt 11 und 16 angeordnet - einen Schaltpfad, während von einem sechsten Verbindungspunkt 34 die Freilaufdiode 33 als Freilaufpfad zum dritten Verbindungspunkt 17 führt. Der Zerhackerschalter 32 ist hochf requent betätigbar. In seinem leitenden Zustand fließt ein Strom vom ersten Verbindungspunkt 11 durch die Induktivität 31 zum zweiten Verbindungspunkt 16, wobei in der Induktivität 31 Energie gespeichert wird. Wird der Zerhackerschalter 32 nun gesperrt, fließt der durch Selbstinduktion auftretende Strom in der Induktivität 31 über die Freilaufdiode 33 zum dritten Verbindungspunkt 17 ab. Der zeitliche Mittelwert des Stromes durch die Induktivität wird durch die Zeitdauern, in denen der Zerhackerschalter 32 leitend oder gesperrt ist, bestimmt.

Der Umwandlergruppe 30 ist ein erstes Entstörfilter 35 am ersten und zweiten Verbindungspunkt 11 bzw. 16 vor- und ein zweites Entstörfilter 36 am dritten Verbindungspunkt 17 nachgeschaltet. Jedes der Entstörfilter 35, 36 umfaßt eine Längsinduktivität 37 bzw. 38 sowie je zwei Querkapazitäten 39, 41 bzw. 40, 42. Die Entstörfilter 35, 36 dienen der Dämpfung hochfrequenter Störspannungen und sind derart dimensioniert, das sie auf den Energiefluß durch die Umwandlergruppe 30 und damit das Schaltnetzteil 22 keinen nennenswerten Einfluß ausüben.

Bei der vorstehend beschriebenen Schaltungsanordnung sind mehrere, unterschiedliche Betriebsarten möglich, von denen einige besonders vorteilhafte im nachfolgenden beispielhaft erläutert werden. An den Anschlüssen 1 und 2 wird dabei als Beispiel eine sinusförmige Spannung mit einer Frequenz von 50 Hz eingespeist. Jede der Teillasten 3, 4 ist für eine mit PO bezeichnete, maximale Leistungsaufnahme ausgelegt, so daß die gesamte Leistungsaufnahme der Last, Pmax, dem Doppelten von PO entspricht. Das Schaltnetzteil 22 ist dabei so ausgebildet, daß durch Variation des Tastverhältnisses einer dem Steueranschluß des Zerhackerschalters 32 zugeführten, rechteckförmigen Steuerspannung mit einer Frequenz z.B. oberhalb von 20 KHz die von der jeweils über das Schaltnetzteil 22 betriebenen Teillast 3 oder 4 aufgenommene, mittlere Leistung in einem Bereich von 0 bis P0 einstellbar ist.

In einem ersten Betriebsfall werden die Verbindungszweige 20, 21 von der nicht dargestellten Steuerschaltung dauernd gesperrt geschaltet. In einem ersten Zeitabschnitt, der im vorliegenden Beispiel einer ersten Halbwelle der Wechselspannung an den Anschlüssen 1, 2 entspricht und währenddessen am ersten Anschluß 1 eine gegenüber dem zweiten Anschluß 2 positive Spannung auftritt, werden von der Steuerschaltung außerdem der zweite Schalter 6 sowie der zweite Rückflußzweig 14 gesperrt, der erste Schalter 5 und der erste Rückf lußzweig 15 dagegen in den leitenden Zustand überführt. Vom ersten Anschluß 1 fließt somit bei leitendem Zerhackerschalter 32 ein Strom durch die erste Teillast 3, den ersten Schalter 5, den Schaltpfad des Schaltnetzteils 22 und den zweiten Ableitzweig 12 zum zweiten Anschluß 2. Bei gesperrtem Zerhackerschalter 32 fließt der Strom im Freilaufpfad des Schaltnetzteils 22, d.h. durch die Induktivität 31 und die Freilaufdiode 33, von der ersten Teillast 3 und dem ersten Schalter 5 über den ersten Rückflußzweig 15 zur ersten Teillast 3 zurück. Die Schaltungsanordnung stellt somit in dieser Betriebsart im ersten Zeitabschnitt einen Flußwandler für die erste Teillast 3 dar, von dem die von dieser aufgenommene Leistung in an sich bekannter Weise einstellbar ist. Eine besonders vorteilhafte, verlustarme Betriebsweise, die hier angewendet werden kann, ist in der deutschen Patentanmeldung P 38 38 430.2 beschrieben.

In einem zweiten Zeitabschnitt, der vorzugsweise einer zweiten, sich an die erste anschließenden Halbperiode der Wechselspannung entspricht, während der die Spannung am zweiten Anschluß 2 größer ist als die Spannung am ersten Anschluß 1, werden nun der erste Schalter 5 und der erste Rückflußzweig 15 gesperrt und der zweite Schalter 6 sowie der zweite Rückflußzweig 14 in den leitenden Zustand überführt, während die Verbindungszweige 20, 21 weiterhin gesperrt bleiben. Es wird dann ein Strom von dem zweiten Anschluß 2 über die zweite Teillast 4, den zweiten Schalter 6, das Schaltnetzteil 22 und den ersten Ableitzweig 13 zum ersten Anschluß 1 geleitet, wobei durch das Schaltnetzteil 22 wieder in der beschriebenen Weise eine Einstellung der Leistungsaufnahme der zweiten Teillast 4 vorgenommen werden kann. Dabei fließt bei gesperrtem Zerhackerschalter 32 ein Strom durch die zweite Teillast 4, den zweiten Schalter 6, den Freilaufpfad des Schaltnetzteils 22 und den zweiten Rückflußzweig 14.

Werden bei der beschriebenen Betriebsart Frequenz- und Tastverhältnis der dem Zerhackerschalter 32 zugeführten Steuerspannung während einer Halbwelle der Wechselspannung konstant gehalten, ergibt sich nach Ausmittelung der Stromanteile durch die Teillasten, die die Frequenz der Steuerspannung aufweisen, d.h. aller hochfrequenten Stromteile, in den Entstörfiltern 35, 36 ohne weiteres Zutun ein sinusförmiger Strom durch die Quelle.

Während in der ersten Betriebsart die gesamte, von der Last aufgenommene Leistung zwischen 0 und P0 variiert werden kann, werden in einer zweiten Betriebsart Gesamtleistungen zwischen P0 und Pmax eingestellt. Dazu werden in aufeinander folgenden Zeitabschnitten, insbesondere Halbwellen der Wechselspannung, die Schalter 5, 6 und die Rückflußzweige 14, 15 in der gleichen Weise geschaltet und das Schaltnetzteil 22 ebenso betrieben wie in der ersten Betriebsart. Zusätzlich wird jedoch nun während des ersten Zeitabschnitts, d.h. der ersten Halbwelle der Wechselspannung, in der die Spannung am ersten Anschluß 1 positiv gegenüber der Spannung am zweiten Anschluß 2 ist, der erste Verbindungszweig 21 von der Steuerschaltung leitend geschaltet, wohingegen der zweite Verbindungszweig 20 gesperrt bleibt. Dann fließt zusätzlich zu dem Strom durch die erste Teillast 3 und das Schaltnetzteil 22 ein ungeregelter Strom vom ersten Anschluß 1 über den ersten Verbindungszweig 21 und die zweite Teillast 4 zum zweiten Anschluß 2. Durch diesen Strom tritt in der zweiten Teillast eine feste, mittlere Leistung PO auf, die mit der einstellbaren Leistung in der ersten Teillast 3 zur gesamten Leistungsaufnahme der Last summiert wird.

Im zweiten Zeitabschnitt, insbesondere der zweiten Halbwelle der Wechselspannung, in der am zweiten Anschluß 2 eine gegenüber dem ersten Anschluß 1 positive Spannung auftritt, wird in der zweiten Betriebsart der erste Verbindungszweig 21 gesperrt und der zweite Verbindungszweig 20 in den leitenden Zustand überführt. Dadurch tritt nun an der ersten Teillast die feste Leistung P0 auf, während die Leistung in der zweiten Teillast 4 über das Schaltnetzteil 22 regelbar ist. Der fest vorgegebene Strom fließt dabei vom zweiten Anschluß 2 über den zweiten Verbindungszweig 20 und die erste Teillast 3 zum ersten Anschluß 1.

Mit den beiden beschriebenen Betriebsarten ist somit insgesamt eine Variation der von der Last aufgenommenen Leistung stufenlos zwischen 0 und Pmax möglich. Dabei wird stets Leistung über das Schaltnetzteil 22 geführt, und zwar zu jeweils einer der Teillasten 3, 4 maximal die Leistung P0.

Bei manchen Anwendungen kann der Fall eintreten, daß insbesondere im Leistungsbereich um den Wert P0 oder Pmax eine feine Einstellung der Leistung, wie sie durch das Schaltnetzteil 22 ermöglicht wird, nicht erforderlich ist, sondern daß es ausreicht, statt dessen die Last mit der festen Leistung P0 bzw. Pmax zu speisen. Durch die Steuerschaltung können dann in einem wählbaren Leistungsbereich um P0 oder Pmax das Schaltnetzteil 22 und die Schalter 5, 6 sowie die Rückflußzweige 14, 15 gesperrt geschaltet werden. Die Teillasten 3, 4 werden dann ausschließlich über die Verbindungszweige 20, 21 mit Energie gespeist. Dies geschieht im Leistungsbereich um PO bevorzugt wechselweise derart, daß in einem ersten Zeitabschnitt nur eine der Teillasten 3, 4 und in einem zweiten Zeitabschnitt nur die zweite der Teillasten 3, 4 Leistung zugeführt erhält. Beispielsweise ist dies im ersten Zeitabschnitt bei am ersten Anschluß 1 positiver Spannung die zweite Teillast 4 mit dem ersten Verbindungszweig 21 und im zweiten Zeitabschnitt bei am zweiten Anschluß 2 positiver Spannung die erste Teillast 3 mit dem zweiten Verbindungszweig 20. Im Bereich der höchstmöglichen Leistung Pmax werden dann beide Verbindungszweige 20, 21 dauernd leitend geschaltet, so daß beide Teillasten 3, 4 dauernd mit Energie gespeist werden. In diesen letztgenannten Betriebsarten ist eine besonders verlustarme Speisung der Last möglich, da die im Schaltnetzteil 22 noch auftretenden Leistungsverluste vermieden werden.

## Patentansprüche

1. Schaltungsanordnung zum Speisen einer Last mit Energie aus einer eine Wechselspannung abgebenden Quelle mit Hilfe eines Schaltnetzteils (22),
dadurch gekennzeichnet, daß die Last wenigstens zwei Teillasten (3, 4) umfaßt und daß Energie einer der Teillasten (3 bzw. 4) über das Schaltnetzteil (22) und wahlweise zusätzlich wenigstens einer zweiten der Teillasten (4 bzw. 3) unmittelbar aus der Quelle zuführbar ist.

2. Schaltungsanordnung nach Anspruch 1,
dadurch gekennzeichnet, daß in einem ersten Zeitabschnitt eine erste Teillast (3) über das Schaltnetzteil (22) und wahlweise zusätzlich wenigstens eine zweite Teillast (4) unmittelbar aus der Quelle gespeist werden kann, daß in einem zweiten Zeitabschnitt die zweite Teillast (4) über das Schaltnetzteil (22) und wahlweise zusätzlich wenigstens die erste Teillast (3) unmittelbar aus der Quelle gespeist und diese Reihenfolge zyklisch fortgesetzt werden kann.

3. Schaltungsanordnung nach Anspruch 2,
dadurch gekennzeichnet, daß der erste und der zweite Zeitabschnitt je wenigstens nahezu einem ganzzahligen Vielfachen einer Halbperiode der Wechselspannung entsprechen.

4. Schaltungsanordnung nach Anspruch 3,
dadurch gekennzeichnet, daß der erste Zeitabschnitt einer ersten und der zweite Zeitabschnitt einer daran anschließenden zweiten Halbperiode der Wechselspannung entspricht.

5. Schaltungsanordnung nach Anspruch 4,
gekennzeichnet durch
- zwei Lastzweige (3, 5 bzw. 4, 6), die je eine Teillast (3 bzw. 4) und einen dazu in Reihe angeordneten Schalter (5 bzw. 6) umfassen und in Reihe zwischen zwei Anschlüsse (1 bzw. 2) der Quelle geschaltet sind, wobei einer der Pole jeder Teillast (3 bzw. 4) mit je einem Anschluß (1 bzw. 2) der Quelle verbunden ist,
- zwei Ableitzweige (12, 13) und zwei Rückflußzweige (14, 15) je in Reihe zwischen den Anschlüssen (1, 2) der Quelle,
- je einen Verbindungszweig (21 bzw. 20) zwischen je einem der Anschlüsse (1 bzw. 2) der Quelle und dem Verbindungspunkt (18 bzw. 19) zwischen der Teillast (4 bzw. 3) und dem Schalter (6 bzw. 5) des mit dem anderen der Anschlüsse (2 bzw. 1) der Quelle verbundenen Lastzweiges (4, 6 bzw. 3, 5),
- sowie dadurch, daß das Schaltnetzteil (22) einen über eine Induktivität (31) und einen hochf requent betätigbaren Zerhackerschalter (32) führenden Schaltpfad sowie einen Freilaufpfad (über 33) umfaßt, über den ein Strom in der Induktivität (31) bei sperrendem Zerhackerschalter (32) ableitbar ist,
- daß der Verbindungspunkt (11) der Lastzweige (3, 5 bzw. 4, 6) mit dem Verbindungspunkt (16) der Ableitzweige (12, 13) über den Schaltpfad und mit dem Verbindungspunkt (17) der Rückflußzweige (14, 15) über den Freilaufpfad verbunden ist,
- wobei in jeder Halbperiode der Wechselspannung Strom in einem der Lastzweige (3, 5 bzw. 4, 6) über den Schaltpfad und den gegenüberliegenden Ableitzweig (12 bzw. 13) bzw. zur Teillast (3 bzw. 4) zurück über den Freilaufpfad (über 33) und einen Rückflußzweig (15 bzw. 14) und wahlweise zusätzlich durch die jeweils andere Teillast (4 bzw. 3) und den mit ihr verbundenen Verbindungszweig (21 bzw. 20) leitbar ist.

6. Schaltungsanordnung nach Anspruch 5,
dadurch gekennzeichnet, daß die Schalter (5, 6) in den Lastzweigen (3, 5 bzw. 4, 6) als unidirektionale Halbleiterschalter ausgebildet sind.

7. Schaltungsanordnung nach Anspruch 5,
dadurch gekennzeichnet, daß die Verbindungszweige (20, 21) bidirektonale Halbleiterschalter umfassen.

8. Schaltungsanordnung nach Anspruch 5,
dadurch gekennzeichnet, daß die Ableitzweige (12, 13) unidirektional leitende Elemente umfassen.

9. Schaltungsanordnung nach Anspruch 5,
dadurch gekennzeichnet, daß die Rückflußzweige (14, 15) einfache Halbleiterschalter enthalten.

10. Schaltungsanordnung nach Anspruch 5,
dadurch gekennzeichnet, daß die Halbleiterschalter in Last- (3, 5 bzw. 4, 6), Verbindungs- (20, 21) und Rückflußzweigen (14, 15) im Wechsel der Halbperioden der Wechselspannung umsteuerbar sind.

## Claims

1. A circuit arrangement for supplying a load with energy from an AC-voltage source by means of a switch-mode power supply unit (22), characterized in that the load comprises at least two partial loads (3, 4), and in that energy can be supplied to one of the partial loads (3, 4) through the switch-mode power supply unit (22) and, as desired, also to at least a second one of the partial loads (4, 3) directly from the source.

2. A circuit arrangement as claimed in Claim 1, characterized in that during a first time period a first partial load (3) can be supplied through the switch-mode power supply unit (22) and, as required, also at least a second partial load (4) directly from the source, while in a second time period the second partial load (4) can be supplied through the switch-mode power supply unit (22) and, if required, also at least the first partial load (3) directly from the source, which sequence can be continued cyclically.

3. A circuit arrangement as claimed in Claim 2, characterized in that the first and the second time periods each correspond at least substantially to an integral number of half cycles of the AC-voltage.

4. A circuit arrangement as claimed in Claim 3, characterized in that the first time period corresponds to a first half cycle and the second time period to an immediately following second half cycle of the AC-voltage.

5. A circuit arrangement as claimed in Claim 4, characterized by
- two load branches (3, 5 and 4, 6) which each comprise a partial load (3, 4) and a switch (5, 6) connected in series with it and which are connected in series between two source terminals (1, 2), one of the poles of each partial load (3, 4) being connected to a respective source terminal (1, 2),
- two diversion branches (12, 13) and two return branches (14, 15), each in series between the source terminals (1, 2),
- a connection branch (20, 21) between each of the source terminals (1, 2) and the connection point (18, 19) between the partial load (4, 3) and the switch (6, 5) of the load branch (4, 6; 3, 5) connected to the other one (2, 1) of the source terminals,
- further characterized in that the switch-mode power supply unit (22) comprises a switching line which runs via an inductive impedance (31) and a high-frequency operated chopper switch (32), and an open line (33), via which a current in the inductive impedance (31) can be branched off when the chopper switch (32) is not conducting, and
- in that the junction point (11) of the load branches (3, 5; 4, 6) is connected to the junction point (16) of the diversion branches (12, 13) via the switching line and to the junction point (17) of the return branches (14, 15) via the open line,
- while during each half cycle of the AC-voltage current can be conducted in one of the load branches (3, 5; 4, 6) via the switching line and the opposite diversion branch (12, 13), or back to the partial load via the open line (33) and a return branch (15, 14) and, if desired, also through the other partial load (4, 3) and the connection branch (21, 20) connected to it.

6. A circuit arrangement as claimed in Claim 5, characterized in that the switches (5, 6) in the load branches (3, 5; 4, 6) are in the form of unidirectional semiconductor switches.

7. A circuit arrangement as claimed in Claim 5, characterized in that the connection branches (20, 21) comprise bidirectional semiconductor switches.

8. A circuit arrangement as claimed in Claim 5, characterized in that the diversion branches (12, 13) comprise unidirectionally conducting elements.

9. A circuit arrangement as claimed in Claim 5, characterized in that the return branches (14, 15) comprise simple semiconductor switches.

10. A circuit arrangement as claimed in Claim 5, characterized in that the semiconductor switches in the load (3, 5; 4, 6) connection (20, 21) and return branches (14, 15) can be switched over at the change between half cycles of the AC-voltage.

## Revendications

1. Circuit conçu pour fournir à une charge de l'énergie provenant d'une source de tension alternative au moyen d'une alimentation à découpage (22), caractérisé en ce que la charge comporte au moins deux charges partielles (3, 4) et que de l'énergie peut être fournie à l'une des deux charges partielles (3, 4) par l'intermédiaire de l'alimentation à découpage (22) et que, optionnellement, en outre de l'énergie provenant directement de la source peut être fournie au moins à une deuxième des charges partielles.

2. Circuit selon la revendication 1, caractérisé en ce que dans un premier intervalle une première charge partielle (3) peut être alimentée par l'intermédiaire de l'alimentation à découpage (22) et que, optionnellement, en outre au moins une deuxième charge partielle (4) peut être alimentée directement par la source, en ce que dans un deuxième intervalle la deuxième charge partielle (4) peut être alimentée par l'intermédiaire de l'alimentation à découpage (22) et que, optionnellement, en outre au moins la première charge partielle (3) peut être alimentée directement par la source et que cet ordre de suite peut être continué de façon cyclique.

3. Circuit selon la revendication 2, caractérisé en ce que les premier et deuxième intervalles correspondent chacun sensiblement au moins à un multiple entier d'une demi-période de la tension alternative.

4. Circuit selon la revendication 3, caractérisé en ce que le premier intervalle correspond à une première demi-période de la tension alternative et que le deuxième intervalle subséquent correspond à une deuxième demi-période de la tension alternative.

5. Circuit selon la revendication 4, caractérisé par
- deux branches de charge (3, 5 respectivement 4, 6) présentant chacune une charge partielle (3 respectivement 4) et un commutateur associé (5 respectivement 6) monté en série, et montées en série entre deux bornes (1 respectivement 2) de la source, l'une des pôles de chaque charge partielle (3, respectivement 4) étant reliée à l'une des bornes (1 respectivement 2) de la source,
- deux branches de dérivation (12, 13) et deux branches de retour (14, 15), chacune montée en série entre les bornes (1 respectivement 2) de la source,
- chaque fois une branche de connexion (21 respectivement 20) intercalée entre chacune des bornes (1 respectivement 2) de la source et le point de jonction (18 respectivement 19) situé entre la charge partielle (4 respectivement 3) et le commutateur (6 respectivement 5) de la branche de charge (4, 6 respectivement 3, 5) reliée aux autres bornes (2 respectivement 1) de la source,
- et caractérisé en ce que par l'intermédiaire d'une inductance (31) et d'un commutateur hacheur (32) commutable à haute fréquence l'alimentation à découpage (22) comporte une voie de commutation ainsi qu'une voie libre (par l'interméduiaire de 33) permettant de prélever un courant sur l'inductance (31) lorsque le commutateur hacheur (32) est bloqué,
- en ce que le point de jonction (11) des branches de charge (3, 5 respectivement 4, 6) est relié au point de jonction (16) des branches de dérivation (12, 13) par la voie de commutation et au point de jonction (17) des branches de retour (14, 15) par la voie libre,
- dans chaque demi-période de la tension alternative du courant pouvant être conduit dans l'une des branches de charge (3, 5 respectivement 4, 6) à travers la voie de commutation et la branche de dérivation (12 respectivement 13) situé à l'opposé, respectivement du courant pouvant être retourné vers la charge partielle (3 respectivement 4) à travers la voie libre (33) et une branche de retour (15 respectivement 14) et optionnellement du courant pouvant être conduit chaque fois en outre à travers l'autre charge partielle (4 respectivement 3) et la branche de connexion (21 respectivement 20) reliée à ladite charge.

6. Circuit selon la revendication 5, caractérisé en ce que les commutateurs (5, 6) incorporés dans les branches de charge (3, 5 respectivement 4, 6) sont conçus comme des commutateurs semiconducteurs unidirectionnels.

7. Circuit selon la revendication 5, caractérisé en ce que les branches de connexion (20, 21) comportent des commutateurs semiconducteurs bidirectionnels.

8. Circuit selon la revendication 5, caractérisé en ce que les branches de dérivation comportent des éléments unidirectionnellement conducteurs.

9. Circuit selon la revendication 5, caractérisé en ce que les branches de retour (14, 15) comportent des commutateurs semiconducteurs simples.

10. Circuit selon la revendication 5, caractérisé en ce que les commutateurs semiconducteurs incorporés dans les branches de charge (3, 5 respectivement 4, 6), dans les branches de connexion (20, 21) et dans les branches de retour (14, 15) sont avantageusement commandés lors du passage des demi-périodes de la tension alternative.
